# EUROPEAN PATENT SPECIFICATION

(11) **EP 3 299 579 B1**
(45) Date of publication and mention of the grant of the patent: **17.02.2021**
(21) Application number: 17192394.9
(22) Date of filing: 21.09.2017
(51) Int. Cl.: F01D 5/00, B23K 20/12, B23P 6/00

(54) **METHOD INVOLVING FRICTION PLUG WELDING A FLANGE**
VERFAHREN MIT REIBSCHLUSSSCHWEISSEN EINES FLANSCHES
PROCÉDÉ IMPLIQUANT LE SOUDAGE D'UNE BRIDE PAR FRICTION

(30) Priority: 26.09.2016 US 201615276021
(43) Date of publication of application: 28.03.2018
(73) Proprietor: United Technologies Corporation, Farmington, CT 06032 (US)
(72) Inventor: LIN, Wangen, S. Glastonbury, CT Connecticut 06073 (US); BRINDLEY, William J., Hebron, CT Connecticut 06248 (US); SAXTON, Bruce R., West Suffield, CT Connecticut 06093 (US); IVORY, Steven, Woodstock, CT Connecticut 06281 (US)
(74) Representative: Dehns

(56) References cited:
- WO-A1-2013/168072
- DE-A1-102009 060 756
- US-A- 3 487 530
- US-A1- 2006 266 797
- US-A1- 2012 148 392
- US-A1- 2013 081 269

## Description

### BACKGROUND OF THE INVENTION

### 1. Technical Field

This disclosure relates to a method (see claim 1), for repairing or reconfiguring of a fastener aperture in a component.

### 2. Background Information

A modern commercial gas turbine engine may include an aluminum fan case. Flanges with multiple bolt holes at each end of the fan case are used to secure that case to neighboring components. After operation of the gas turbine engine, some of the bolt holes may be damaged due to corrosion and/or other causes and need repair. These damaged bolt holes may be repaired using conventional arc welding processes. However, there are technical challenges associated with arc welding processes. The weld metal property of aluminum alloy from an arc welding process is known to be much lower than the base metal. The melting and solidification inherently associated with the arc welding process can create weld defects such as porosity or lack of fusion. Aluminum alloy is known to be prone to the formation of such weld defects. The formation of weld defects in aluminum alloy may further reduce the capability of aluminum alloy weld and make the aluminum alloy weld unable to meet the performance requirements especially when the weld metal property is needed to be closer to that of the base metal.

There is a need in the art for an improved method for repairing damaged bolt holes in a case of a gas turbine engine.

US 2012 148 392 A, representing the most relevant state of the art, describes a component comprising a tubular base, one or more annular flanges and a tubular liner wherein at least a first fastener aperture extends through a first of the annular flanges. The tubular base and the one or more annular flanges comprise metallic material, wherein the tubular liner (30) comprises composite material.

DE 10 2009 060 756 describes a method involving a component comprising a first fastener aperture that extends through the component, with machining the component to enlarge the first fastener aperture to provide an enlarged aperture , friction plug welding the component to plug the enlarged aperture with friction plug welded material, and machining a second fastener aperture in the friction plug welded material, the second fastener aperture extending through the component.

### SUMMARY OF THE DISCLOSURE

A method according to the present invention is defined in claim 1, the method involving a component comprising a first fastener aperture that extends through the component. During this method, the component is machined to enlarge the first fastener aperture to provide an enlarged aperture. The component is friction plug welded to plug the enlarged aperture with friction plug welded material. A second fastener aperture is machined in the friction plug welded material, where the second fastener aperture extends through the component.

The friction plug welding may include spinning a plug about a longitudinal axis of the plug, and moving the spinning plug along the longitudinal axis into the enlarged aperture.

The moving of the spinning plug may include pushing or pulling the spinning plug along the longitudinal axis into the enlarged aperture.

A portion of the friction plug welded material may be removed before the machining (e.g., drilling) of the second fastener aperture, where the portion projects out from the component (e.g., flange); e.g., from a surface of the flange.

The machining of the component (e.g., flange) may include removing a damaged portion of the component. In addition or alternatively, the machining of the component (e.g., flange) may include removing pitted material from the component. In addition or alternatively, the machining of the component (e.g., flange) may include removing corroded material from the component.

The first fastener aperture may have a first cross-sectional area. The second fastener aperture has a second cross-sectional area that is different from the first cross-sectional area.

The first fastener aperture may have a first cross-sectional shape. The second fastener aperture may have a second cross-sectional shape that is different from the first cross-sectional shape.

The first fastener aperture may extend axially through the component (e.g., flange) along a first axis. The second fastener aperture may extend axially through the component (e.g., flange) along a second axis which is substantially co-axial with the first axis.

The component may be configured from or otherwise include a case for a gas turbine engine.

A fan case structure for the gas turbine engine may include the case.

The method may be performed without heat treating the component (e.g., flange) before or after the friction plug welding.

During the method, the component (e.g., flange) may be heat treated after the friction plug welding and, in some embodiments, after the drilling of the second fastener aperture.

The foregoing features and the operation of the invention will become more apparent in light of the following description and the accompanying drawings.

### BRIEF DESCRIPTION OF THE DRAWINGS

FIG. 1 is a schematic illustration of a case of a gas turbine engine.
FIG. 2 is a sectional view of section 2-2 in FIG. 1.
FIGS. 3A-3C are schematic illustrations of portions of damaged flanges.
FIG. 4 is a flow diagram of a method for involving a component such as the component of FIGS. 1 and 2.
FIGS. 5-12 are schematic illustrations depicting steps of the method of FIG. 4.
FIG. 13 is a side cutaway illustration of a gas turbine engine.

### DETAILED DESCRIPTION OF THE INVENTION

The present disclosure includes devices, systems and methods for repairing, reconfiguring and/or otherwise working on a component with one or more apertures. The component may be repaired, for example, to restore at least one aperture and/or an area near that aperture to meet its intended application; e.g., shape, dimension, finish, etc. In another example, the component may be reconfigured to modify at least one aperture and/or an area near that aperture to meet a new application.

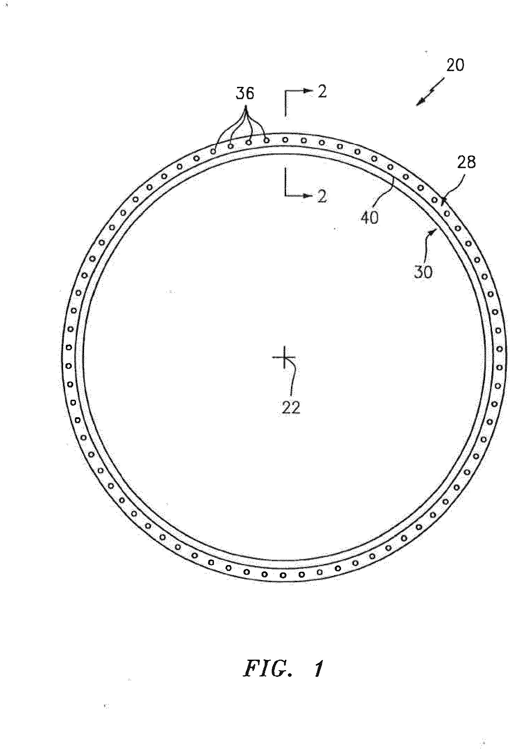

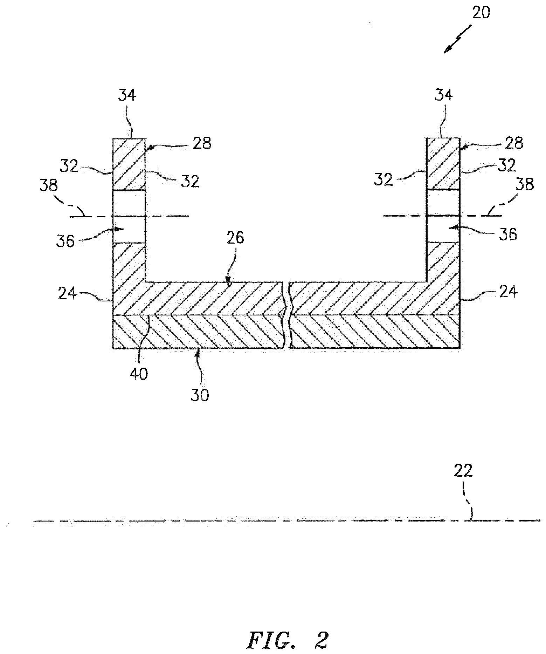

An exemplary embodiment of a component 20 is schematically illustrated in FIGS. 1 and 2. This component 20 is configured as a tubular case for a gas turbine engine, which case may be an axial segment of a tubular fan case structure for the gas turbine engine. The present disclosure, however, is not limited to the foregoing exemplary component configuration, or to gas turbine engine applications.

The component 20 of FIGS. 1 and 2 is configured having a tubular, full hoop body. The component 20 extends circumferentially around an axial centerline 22; e.g., a centerline of a gas turbine engine. The component 20 extends axially along the centerline 22 between opposing component ends 24.

The component 20 includes according to the present invention a tubular base 26 and one or more annular flanges 28, and a tubular liner 30. The component 20 may also include one or more other members / structures radially outside and/or inside of the base 26 structure.

The base 26 extends circumferentially around the centerline 22 and circumscribes the liner 30. The base 26 extends axially along the centerline 22 between the opposing component ends 24.

Each of the flanges 28 extends circumferentially around the centerline 22 and circumscribes the base 26. Each of the flanges 28 extends axially between opposing flange side surfaces 32. Each of the flanges 28 projects, for example radially outward, from the base 26 to a distal end 34. One of the flanges 28 is disposed at (e.g., on, adjacent or proximate) one of the component ends 24. The other one of the flanges 28 is disposed at the other one of the component ends 24.

Each of the flanges 28 includes one or more fastener apertures 36. The fastener apertures 36 associated with each flange 28 are arranged about the centerline 22 in a respective annular array. Each of the fastener apertures 36 extends along a respective axis 38 through the flange 28 between the opposing flange side surfaces 32. The term "fastener aperture" may describe a hole configured to receive a fastener such as a screw, bolt, stud, rivet, etc.

Each of the flanges 28 is connected to the base 26. Each of the flanges 28 is formed integral with the base 26 such that the base 26 and the flanges 28 are part of a unitary, monolithic body. This body is formed from metallic material such as, but not limited to, aluminum (Al), aluminum alloy, nickel (Ni)-based super alloy, nickel based alloy, titanium (Ti) alloy, cobalt (Co)-based alloy, or stainless steel.

The liner 30 is a structure within the base 26 structure; e.g., a case structure. The liner 30 may be configured as or otherwise include one or more acoustic panels (e.g., noise attenuating panels), one or more anti-icing panels, etc. The liner 30 extends circumferentially around the centerline 22 within a bore of the base 26. The liner 30 extends axially along the centerline 22, for example, between the opposing component ends 24. The liner 30 may be formed discrete from the base 26, but engaged with an interior surface 40 of the base 26 that forms the bore after assembly. The liner 30, according to the present invention, is adhered with an adhesive (e.g., epoxy, resin, etc.) to the base 26 adjacent the interior surface 40. The liner 30 according to the present invention is formed from or otherwise includes composite material.

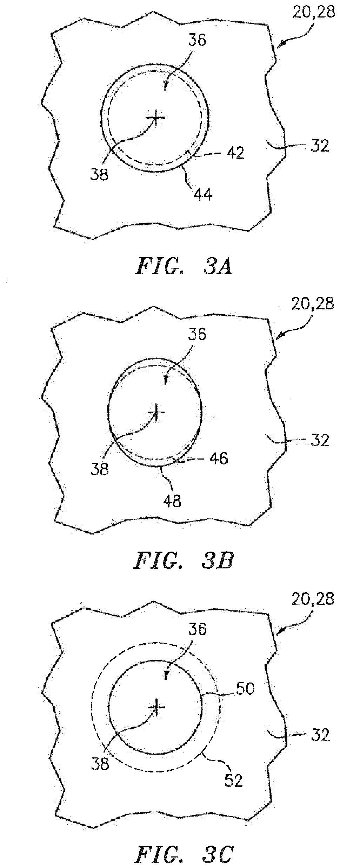

Each fastener aperture 36 in each flange 28 is configured to receive a respective one of a plurality of fasteners (not shown), where each fastener extends into a respective one of the fastener apertures 36. The fasteners attach the component 20 with at least one other component; e.g., an adjacent axial segment of the fan case structure. During operation, each of the flanges 28 may be subject to various forces, internal stresses and/or exposure to certain environmental conditions that may wear or otherwise damage the flange 28. Such damage may alter the configuration (e.g., shape, dimension, etc.) of one or more of the fastener apertures 36 and/or the configuration (e.g., dimension, surface finish, internal structure, etc.) of the flange areas forming and/or near those fastener apertures 36. Exemplary embodiments of such damage to the flange 28 is illustrated in FIGS. 3A-3C.

FIG. 3A depicts the flange 28 with a fastener aperture according to original specification (see dotted line 42) overlaid with the fastener aperture after the flange 28 forming that aperture is worn (see solid line 44). In this embodiment, the flange 28 is worn in such a manner so as to increase a cross-sectional dimension (e.g., radius) of the fastener aperture 36.

FIG. 3B depicts the flange 28 with a fastener aperture according to original specification (see dotted line 46) overlaid with the fastener aperture after the flange 28 forming that aperture is worn (see solid line 48). In this embodiment, the flange 28 is worn in such a manner so as to increase a cross-sectional dimension (e.g., radius) of the fastener aperture 36 as well as change a cross-sectional shape of the fastener aperture 36 from a circular shape to an oval shape.

FIG. 3C depicts the flange 28 with a fastener aperture (see solid line 50), which flange 28 may or may not have been worn as described above with respect to FIG. 3A, 3B or otherwise. FIG. 3C also depicts the flange 28 with a damaged portion (see area between dotted line 52 and solid line 50), which may at least partially form and/or be near (e.g., surround) the fastener aperture 36. This damaged portion of the flange 28 may include pitting, cracks, fractures, corrosion and/or other defects in the flange 28 material.

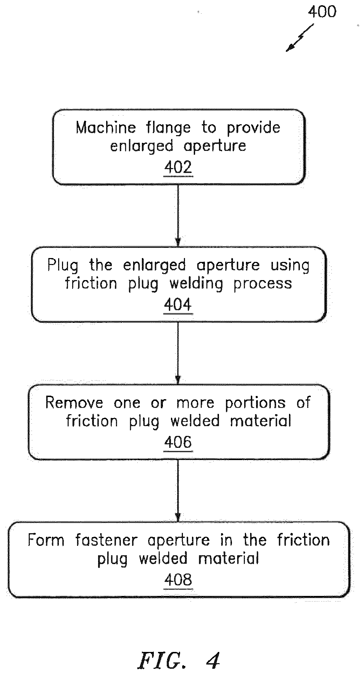

FIG. 4 is a flow diagram of a method 400 involving a component such as the component 20 described above and shown in FIGS. 1 and 2. For ease of description, the method 400 is described below as repairing a damaged portion of the flange 28 as described above with respect to FIG. 3A. However, the method 400 may also be performed to repair, reconfigure or otherwise work on a portion of the flange 28 as described above with respect to FIG. 3B, 3C and/or otherwise.

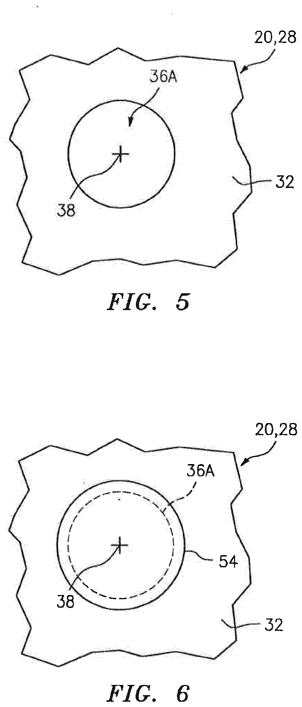

In step 402, the flange 28 is machined to enlarge a damaged fastener aperture 36A (see FIG. 5) to provide an enlarged aperture 54 (see FIG. 6). The damaged fastener aperture 36A of FIG. 5, for example, may be drilled out with a drill bit to provide the enlarged aperture 54 of FIG. 6. This machining step 402 may be used to provide the aperture 54 with a predetermined cross-sectional dimension (e.g., radius). The machining step 402 may also be used to provide the aperture 54 with a predetermined shape, particularly where damage to the flange 28 changes the geometry of the aperture 36 as shown in FIG. 3B.

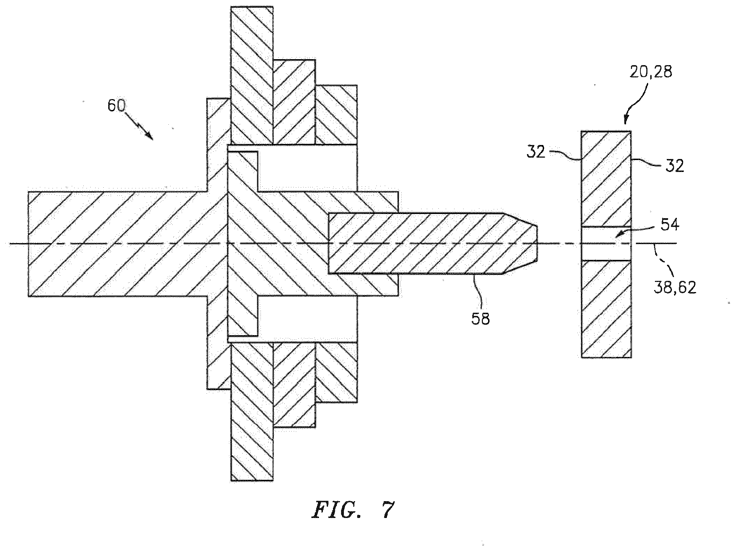

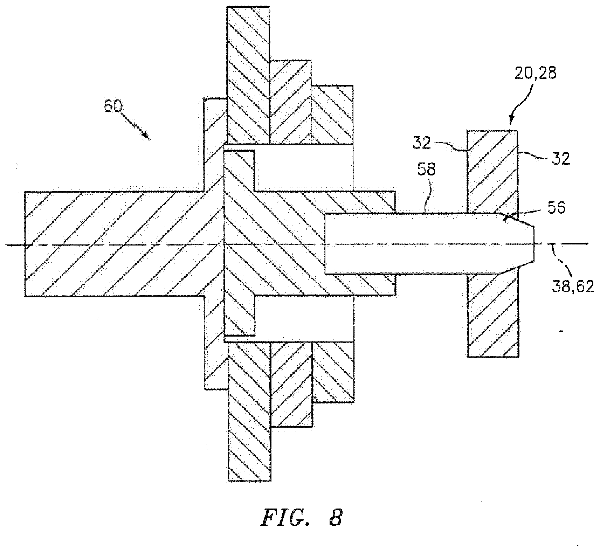

In step 404, the flange 28 is friction plug welded to plug the enlarged aperture 54 with friction plug welded material 56 as shown by FIGS. 7-9. For example, referring to FIG. 7, an elongated plug 58 (e.g., a partially tapered pin) is held within a chuck of a tool 60, where the plug 58 has a larger cross-sectional dimension (e.g., radius) than that of the enlarged aperture 54. The tool 60 spins the plug 58 about a longitudinal axis 62 of the plug 58, which axis 62 is substantially coaxial with the axis 38 of the enlarged aperture 54. The tool 60 and/or a fixture (not shown) holding the component 20 subsequently move relative to one another such that the spinning plug 58 translates along the axis 38, 62 into the enlarged aperture 54. The spinning plug 58 may be pushed into the enlarged aperture 54 as shown by FIGS. 7 and 8. Alternatively, the spinning plug 58 may be pulled through the aperture 54 using other known friction plug welding systems.

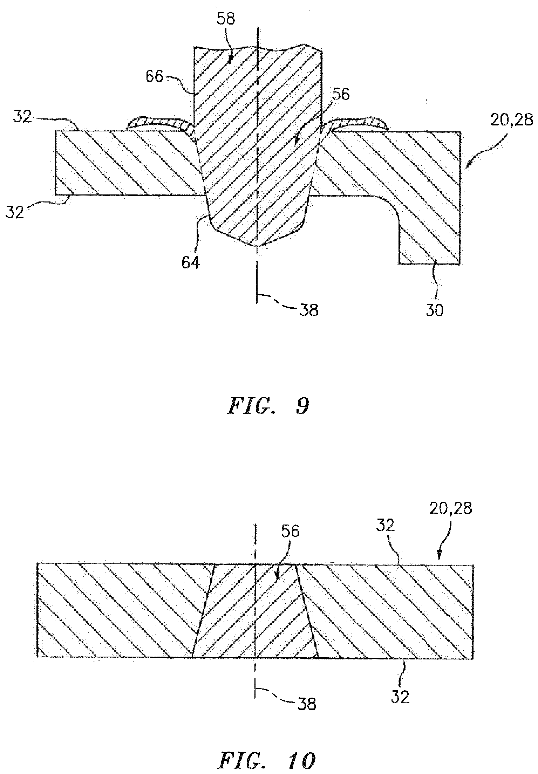

Frictional contact between materials of the plug 58 and the flange 28 during the moving of the spinning plug 58 into the enlarged aperture 54 cause plug 58 and aperture 54 to join together as shown in FIG. 9. In this manner, the plug 58 is welded to the flange 28 and thereby fills the previously enlarged aperture 54 with friction plug welded material 56; i.e., material of the welded plug 58.

Typically, a friction plug welding process generates significantly less heat than other known welding processes such arc welding; e.g., tungsten inert gas (TIG) welding or electron beam welding. As a result, the material of the flange 28 may not require heat treatment after the welding step 404. In addition, the heat generated during the welding step 404 is maintained below a critical temperature of the composite material configured with the component 20, as defined in the present invention. According to the present invention, where the liner 30 of FIGS. 1 and 2 is bonded to the base 26 via a composite material adhesive, the heat generated during the welding step 404 may be less than a temperature at which molecular bonds of the adhesive breakdown.

In step 406, one or more portions 64 and 66 of the friction plug welded material 56 may be removed. For example, referring to FIG. 9, a tip portion 64 of the welded plug 58 may project axially out from one of the flange side surfaces 32. A base portion 66 of the welded plug 58 may project axially out from another one of the flange side surfaces 32. Each of these portions 64 and 66 of the welded plug 58 may be machined (e.g., cut off and/or ground down) so as to provide the flange 28 with smooth flange side surfaces 32 as shown in FIG. 10.

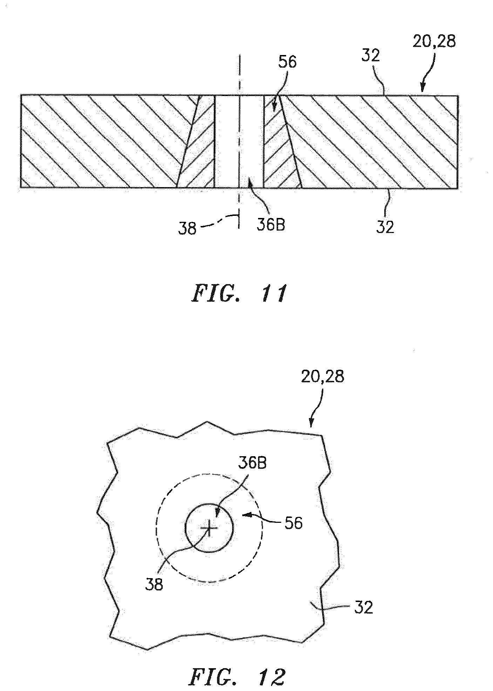

In step 408, a new (e.g., repaired or reconfigured) fastener aperture 36B is formed in the friction welded material 56 as shown in FIGS. 11 and 12. The new fastener aperture 36B, for example, may be drilled or otherwise machined into the friction welded material 56. The new fastener aperture 36B of FIGS. 11 and 12 is configured with an axis that is substantially coaxial with the axis 38 of the damaged fastener aperture 36A. Thus, the new fastener aperture 36B replaces the damaged fastener aperture 36A.

Depending on the specific damage to the flange 28, the new fastener aperture 36B may have a different (e.g., smaller) cross-sectional dimension and, thus, a different (e.g., smaller) cross-sectional area than the damaged fastener aperture 36A. The new fastener aperture 26B may also or alternatively have a different cross-sectional shape than the damaged fastener aperture 36A. The axes of the fastener aperture 36A and/or 36B may be parallel to the centerline 22, or alternatively angled relative to the centerline 22.

In some embodiments, the method 400 may be performed to repair a damaged portion of another member of a case structure other than the flange 28 as described above. In still other embodiments, the method 400 may be performed to repair a damaged portion in another turbine engine component other than a case structure; e.g., a stator vane, a rotor disk, a shaft, a mid-turbine frame, etc.

In some embodiments, the component 20 may be heat treated after the friction plug welding step. This heat treatment may be performed before or after the formation of the new fastener aperture 36B.

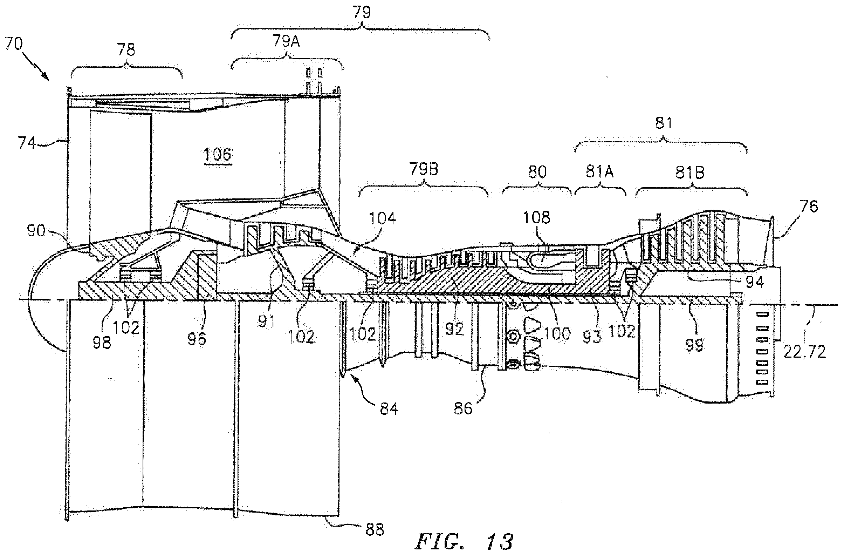

In some embodiments, the component 20 may be in an aero gas turbine engine. FIG. 13 illustrates an exemplary embodiment of such a gas turbine engine 70, which is configured as a geared turbofan gas turbine engine. This turbine engine 70 extends along an axis 72 (e.g., centerline 22) between an upstream airflow inlet 74 and a downstream airflow exhaust 76. The turbine engine 70 includes a fan section 78, a compressor section 79, a combustor section 80 and a turbine section 81. The compressor section 79 includes a low pressure compressor (LPC) section 79A and a high pressure compressor (HPC) section 79B. The turbine section 81 includes a high pressure turbine (HPT) section 81A and a low pressure turbine (LPT) section 81B.

The engine sections 78-81 are arranged sequentially along the axis 72 within an engine housing 84. This housing 84 includes an inner case 86 (e.g., a core case) and an outer case 88 (e.g., a fan case structure), which may include the component 20. The inner case 86 may house one or more of the engine sections 79-81; e.g., an engine core. The outer case 88 may house at least the fan section 78.

Each of the engine sections 78, 79A, 79B, 81A and 81B includes a respective rotor 90-94. Each of these rotors 90-94 includes a plurality of rotor blades arranged circumferentially around and connected to one or more respective rotor disks. The rotor blades, for example, may be formed integral with or mechanically fastened, welded, brazed, adhered and/or otherwise attached to the respective rotor disk(s).

The fan rotor 90 is connected to a gear train 96, for example, through a fan shaft 98. The gear train 96 and the LPC rotor 91 are connected to and driven by the LPT rotor 94 through a low speed shaft 99. The HPC rotor 92 is connected to and driven by the HPT rotor 93 through a high speed shaft 100. The shafts 98-100 are rotatably supported by a plurality of bearings 102. Each of these bearings 102 is connected to the engine housing 84 by at least one stationary structure such as, for example, an annular support strut.

During operation, air enters the turbine engine 70 through the airflow inlet 74. This air is directed through the fan section 78 and into a core gas path 104 and a bypass gas path 106. The core gas path 104 extends sequentially through the engine sections 79-81. The bypass gas path 106 extends away from the fan section 78 through a bypass duct, which circumscribes and bypasses the engine core. The air within the core gas path 104 may be referred to as "core air". The air within the bypass gas path 106 may be referred to as "bypass air".

The core air is compressed by the compressor rotors 91 and 92 and directed into a combustion chamber 108 of a combustor in the combustor section 80. Fuel is injected into the combustion chamber 108 and mixed with the compressed core air to provide a fuel-air mixture. This fuel air mixture is ignited and combustion products thereof flow through and sequentially cause the turbine rotors 93 and 94 to rotate. The rotation of the turbine rotors 93 and 94 respectively drive rotation of the compressor rotors 92 and 91 and, thus, compression of the air received from a core airflow inlet. The rotation of the turbine rotor 94 also drives rotation of the fan rotor 90, which propels bypass air through and out of the bypass gas path 106. The propulsion of the bypass air may account for a majority of thrust generated by the turbine engine 70, e.g., more than seventy-five percent (75%) of engine thrust. The turbine engine 70 of the present disclosure, however, is not limited to the foregoing exemplary thrust ratio.

The component 20 may be included in various aircraft and industrial turbine engines other than the one described above. The component 20, for example, may be included in a geared turbine engine where a gear train connects one or more shafts to one or more rotors in a fan section, a compressor section and/or any other engine section. Alternatively, the component 20 may be included in a turbine engine configured without a gear train. The component 20 may be included in a geared or non-geared turbine engine configured with a single spool, with two spools (e.g., see FIG. 13), or with more than two spools. The turbine engine 70 may be configured as a turbofan engine, a turbojet engine, a propfan engine, a pusher fan engine or any other type of turbine engine. The present disclosure therefore is not limited to any particular types or configurations of turbine engine, or to turbine engine applications as set forth above.

While various embodiments of the present invention have been disclosed, it will be apparent to those of ordinary skill in the art that many more embodiments and implementations are possible within the scope of the present invention as defined in the appended claims.

## Claims

1. A method involving a component (20) comprising a first fastener aperture (36) that extends through the component (20), the method comprising:
machining the component (20) to enlarge the first fastener aperture (36) to provide an enlarged aperture (54);
friction plug welding the component (20) to plug the enlarged aperture (54) with friction plug welded material (56); and
machining a second fastener aperture (36B) in the friction plug welded material (56), the second fastener aperture (36B) extending through the component (20), wherein:
the component (20) comprises a tubular base (26), one or more annular flanges (28) and a tubular liner (30);
the first fastener aperture (36B) extends through a first of the annular flanges (28);
the tubular base (26) and the one or more annular flanges (28) are part of a unitary monolithic body formed from metallic material; and
the tubular liner (30) comprises composite material and is bonded to the tubular base (26) via a composite material adhesive.

2. The method of claim 1, wherein the friction plug welding comprises:
spinning a plug (58) about a longitudinal axis (62) of the plug (58); and
moving the spinning plug (58) along the longitudinal axis (62) into the enlarged aperture (54).

3. The method of claim 2, wherein the moving of the spinning plug (58) comprises pushing the spinning plug (58) along the longitudinal axis (62) into the enlarged aperture (54).

4. The method of claim 2, wherein the moving of the spinning plug (58) comprises pulling the spinning plug (58) along the longitudinal axis (62) into the enlarged aperture (54).

5. The method of any preceding claim, further comprising removing a portion (64,66) of the friction plug welded material (56) that projects out from the flange (28) before the machining of the second fastener aperture (36B).

6. The method of any preceding claim, wherein the machining of the flange (28) comprises removing a damaged portion of the component (20).

7. The method of any preceding claim, wherein the machining of the flange (28) comprises removing pitted material from the component (20).

8. The method of any preceding claim, wherein the machining of the flange (28) comprises removing corroded material from the component (20).

9. The method of any preceding claim, wherein
the first fastener aperture (36) has a first cross-sectional area; and
the second fastener aperture (36B) has a second cross-sectional area that is different from the first cross-sectional area.

10. The method of any preceding claim, wherein
the first fastener aperture (36) has a first cross-sectional shape; and
the second fastener aperture (36B) has a second cross-sectional shape that is different from the first cross-sectional shape.

11. The method of any preceding claim, wherein
the first fastener aperture (36) extends axially through the component (20) along a first axis (38); and
the second fastener aperture (36B) extends axially through the component (20) along a second axis (38) which is substantially co-axial with the first axis (38).

12. The method of any preceding claim, wherein the unitary monolithic body comprises an aluminum alloy.

13. The method of any preceding claim, wherein the component (20) comprises a case (86,88) for a gas turbine engine (70).

## Patentansprüche

1. Verfahren mit einer Komponente (20), die eine erste Befestigungselement-Öffnung (36) umfasst, die sich durch die Komponente (20) erstreckt, wobei das Verfahren Folgendes umfasst:
maschinelles Bearbeiten der Komponente (20), um die erste Befestigungselement-Öffnung (36) zu vergrößern, um eine vergrößerte Öffnung (54) bereitzustellen;
Reibschlussschweißen der Komponente (20), um die vergrößerte Öffnung (54) mit reibschlussgeschweißtem Material (56) zu verstopfen; und
maschinelles Bearbeiten einer zweiten Befestigungselement-Öffnung (36B) in dem reibschlussgeschweißtem Material (56), wobei sich die zweite Befestigungselement-Öffnung (36B) durch die Komponente (20) erstreckt, wobei:
die Komponente (20) eine rohrförmige Basis (26), einen oder mehrere ringförmige Flansche (28) und eine rohrförmige Auskleidung (30) umfasst;
sich die erste Befestigungselement-Öffnung (36B) durch einen ersten der ringförmigen Flansche (28) erstreckt;
die rohrförmige Basis (26) und der eine oder die mehreren ringförmigen Flansche (28) teil eines einstückigen monolithischen Körpers sind, der aus einem Metallmaterial gebildet ist; und
die rohrförmige Auskleidung (30) ein Verbundmaterial umfasst und über einen Verbundmaterial-Klebstoff mit der rohrförmigen Basis (26) verbunden ist.

2. Verfahren nach Anspruch 1, wobei das Reibschlussschweißen Folgendes umfasst:
Drehen eines Stopfens (58) um eine Längsachse (62) des Stopfens (58); und
Bewegen des sich drehenden Stopfens (58) entlang der Längsachse (62) in die vergrößerte Öffnung (54).

3. Verfahren nach Anspruch 2, wobei das Bewegen des sich drehenden Stopfens (58) Drücken des sich drehenden Stopfens (58) entlang der Längsachse (62) in die vergrößerte Öffnung (54) umfasst.

4. Verfahren nach Anspruch 2, wobei das Bewegen des sich drehenden Stopfens (58) Ziehen des sich drehenden Stopfens (58) entlang der Längsachse (62) in die vergrößerte Öffnung (54) umfasst.

5. Verfahren nach einem der vorstehenden Ansprüche, ferner umfassend Entfernen eines Abschnitts (64, 66) des reibschlussgeschweißten Materials (56), der von dem Flansch (28) nach außen hervorsteht, vor dem maschinellen Bearbeiten der zweiten Befestigungselement-Öffnung (36B).

6. Verfahren nach einem der vorstehenden Ansprüche, wobei das maschinelle Bearbeiten des Flansches (28) Entfernen eines beschädigten Abschnitts der Komponente (20) umfasst.

7. Verfahren nach einem der vorstehenden Ansprüche, wobei das maschinelle Bearbeiten des Flansches (28) Entfernen von angegriffenem Material aus der Komponente (20) umfasst.

8. Verfahren nach einem der vorstehenden Ansprüche, wobei das maschinelle Bearbeiten des Flansches (28) Entfernen von korrodiertem Material aus der Komponente (20) umfasst.

9. Verfahren nach einem der vorstehenden Ansprüche, wobei
die erste Befestigungselement-Öffnung (36) eine erste Querschnittsfläche aufweist; und
die zweite Befestigungselement-Öffnung (36B) eine zweite Querschnittsfläche aufweist, die sich von der ersten Querschnittsfläche unterscheidet.

10. Verfahren nach einem der vorstehenden Ansprüche, wobei
die erste Befestigungselement-Öffnung (36) eine erste Querschnittsform aufweist; und
die zweite Befestigungselement-Öffnung (36B) eine zweite Querschnittsform aufweist, die sich von der ersten Querschnittsform unterscheidet.

11. Verfahren nach einem der vorstehenden Ansprüche, wobei
sich die erste Befestigungselement-Öffnung (36) axial durch die Komponente (20) entlang einer ersten Achse (38) erstreckt; und
sich die zweite Befestigungselement-Öffnung (36B) axial durch die Komponente (20) entlang einer zweiten Achse (38) erstreckt, die im Wesentlichen koaxial mit erster Achse (38) ist.

12. Verfahren nach einem der vorstehenden Ansprüche, wobei der einstückige monolithische Körper eine Aluminiumlegierung umfasst.

13. Verfahren nach einem der vorstehenden Ansprüche, wobei die Komponente (20) ein Gehäuse (86, 88) für ein Gasturbinentriebwerk (70) umfasst.

## Revendications

1. Procédé impliquant un composant (20) comprenant une première ouverture de fixation (36) qui s'étend à travers le composant (20), le procédé comprenant :
l'usinage du composant (20) pour agrandir la première ouverture de fixation (36) pour fournir une ouverture agrandie (54) ;
le soudage par friction du composant (20) pour obturer l'ouverture agrandie (54) avec un matériau soudé par friction (56) ; et
l'usinage d'une seconde ouverture de fixation (36B) dans le matériau soudé par friction (56), la seconde ouverture de fixation (36B) s'étendant à travers le composant (20), dans lequel :
le composant (20) comprend une base tubulaire (26), une ou plusieurs brides annulaires (28) et un revêtement tubulaire (30) ;
la première ouverture de fixation (36B) s'étend à travers une première des brides annulaires (28) ;
la base tubulaire (26) et les une ou plusieurs brides annulaires (28) font partie d'un corps monolithique unitaire constitué d'un matériau métallique ;
et
le revêtement tubulaire (30) comprend un matériau composite et est lié à la base tubulaire (26) par l'intermédiaire d'un adhésif en matériau composite.

2. Procédé selon la revendication 1, dans lequel le soudage par friction comprend :
le fait de faire tourner un bouchon (58) autour d'un axe longitudinal (62) du bouchon (58) ; et
le déplacement du bouchon rotatif (58) le long de l'axe longitudinal (62) dans l'ouverture agrandie (54).

3. Procédé selon la revendication 2, dans lequel le déplacement du bouchon rotatif (58) comprend la poussée du bouchon rotatif (58) le long de l'axe longitudinal (62) dans l'ouverture agrandie (54).

4. Procédé selon la revendication 2, dans lequel le déplacement du bouchon rotatif (58) comprend le tirage du bouchon rotatif (58) le long de l'axe longitudinal (62) dans l'ouverture agrandie (54).

5. Procédé selon une quelconque revendication précédente, comprenant en outre le retrait d'une partie (64, 66) du matériau soudé par friction (56) qui fait saillie hors de la bride (28) avant l'usinage de la seconde ouverture de fixation (36B).

6. Procédé selon une quelconque revendication précédente, dans lequel l'usinage de la bride (28) comprend le retrait d'une partie endommagée du composant (20).

7. Procédé selon une quelconque revendication précédente, dans lequel l'usinage de la bride (28) comprend le retrait du matériau piqué du composant (20).

8. Procédé selon une quelconque revendication précédente, dans lequel l'usinage de la bride (28) comprend le retrait du matériau corrodé du composant (20).

9. Procédé selon une quelconque revendication précédente, dans lequel
la première ouverture de fixation (36) a une première zone de section transversale ; et
la seconde ouverture de fixation (36B) a une seconde zone de section transversale qui est différente de la première zone de section transversale.

10. Procédé selon une quelconque revendication précédente, dans lequel
la première ouverture de fixation (36) a une première forme en section transversale ; et
la seconde ouverture de fixation (36B) a une seconde forme en section transversale qui est différente de la première forme en section transversale.

11. Procédé selon une quelconque revendication précédente, dans lequel
la première ouverture de fixation (36) s'étend axialement à travers le composant (20) le long d'un premier axe (38) ; et
la seconde ouverture de fixation (36B) s'étend axialement à travers le composant (20) le long d'un second axe (38) qui est sensiblement coaxial avec le premier axe (38).

12. Procédé selon une quelconque revendication précédente, dans lequel le corps monolithique unitaire comprend un alliage d'aluminium.

13. Procédé selon une quelconque revendication précédente, dans lequel le composant (20) comprend un boîtier (86, 88) pour un moteur à turbine à gaz (70).
